Europäisches Patentamt

European Patent Office

Office européen des brevets

(11) Veröffentlichungsnummer : **0 095 691**
**B1**

# EUROPÄISCHE PATENTSCHRIFT

(45) Veröffentlichungstag der Patentschrift :
22.01.86

(21) Anmeldenummer : 83105059.6

(22) Anmeldetag : 21.05.83

(51) Int. Cl.⁴ : **B 60 R 25/02**

(54) **Zylinderschloss, insbesondere Lenkschloss für ein Kraftfahrzeug.**

Verbunden mit 83901711.8/0109420 (europäische Anmeldenummer/Veröffentlichungsnummer) durch Entscheidung vom 04.04.85.

(30) Priorität : 27.05.82 DE 3219944
18.11.82 DE 3242534

(43) Veröffentlichungstag der Anmeldung :
07.12.83 Patentblatt 83/49

(45) Bekanntmachung des Hinweises auf die Patenterteilung : 22.01.86 Patentblatt 86/04

(84) Benannte Vertragsstaaten :
FR GB IT

(56) Entgegenhaltungen :
DE-A- 2 059 215
DE-A- 2 238 560
DE-B- 1 293 049
GB-A- 1 296 972

(73) Patentinhaber : NEIMAN S.A.
39, Avenue Marceau
F-92400 Courbevoie (FR)

(72) Erfinder : Weber, Günter
Bergerheide 54
D-5600 Wuppertal 1 (DE)

(74) Vertreter : Patentanwaltsbüro Cohausz & Florack
Schumannstrasse 97
D-4000 Düsseldorf 1 (DE)

## Beschreibung

Die Erfindung betrifft ein Zylinderschloß, insbesondere Lenkschloß für ein Kraftfahrzeug, mit mindestens einem durch einen Zylinderkern betätigbaren Sperrteil, insbesondere Sperriegel, der direkt oder über ein Übertragungsteil von einem durch den Zylinderkern betätigbaren Exzenter, Nocken oder Kurvenscheibe in die nicht sperrende Lage bewegbar ist und dort durch eine rechtwinklig zur Schloßachse angeordnete Sperrscheibe gehalten ist, die erst durch Schlüsselabzug freigebbar ist.

Ein solches Schloß, gemäß dem Gattungsbegriff des Anspruchs 1 ist aus der DE-C-1 293 049 bekannt. Hier wird der Sperriegel durch einen am Zylinderkern befestigten Exzenter in die entsperrte Lage bewegt und danach durch eine Sperrscheibe gehalten, die um eine parallel zur Zylinderachse verschobene Achse angelenkt ist und gegen ein Verschwenken durch die Schlüsselspitze gehalten ist. Nach geringfügigem Herausziehen des Schlüssels gibt die Sperrscheibe schwankend nach, so daß der Sperriegel seine sperrende Stellung einnehmen kann. Dieses Schloß blockiert somit schon nach kurzem Schlüsselabzug und weist konstruktionsbedingte große Abmessungen auf. Ferner ist es leicht von außen manipulierbar, da durch einen durch den Schlüsselkanal hindurchgesteckten Gegenstand die Platte verkippbar ist und damit das Innere des Schlosses erreicht werden kann. Eine Verkippbarkeit der Sperrscheibe ist erforderlich, da die Scheibe kippend der Schlüsselspitze dann nachgeben muß, wenn die für die Schlüsselspitze vorgesehene Ausnehmung in der Platte nicht in Höhe des Schlüsselkanals liegt.

Eine ähnliche Sperrscheibe ist auch aus der DE-B-2 059 215 bekannt. Diese bekannte Sperrscheibe gibt auch drehend dem Sperriegel nach und wird durch einen zweiarmigen, zum Zylinderkern parallel geführten Hebel gesteuert, gegenüber dem die Sperrscheibe kippend nachgibt, damit dieser in den Rand der Sperrscheibe einrasten kann. Bei beiden bekannten Schlössern ist die Kippbewegung der Sperrscheibe nur dazu erforderlich, das Teil, das die Scheibe steuert bzw. hält, in die Scheibe einrasten zu lassen. Beide bekannten Ausführungen sind konstruktiv aufwendig und erfordern neben einer Drehbewegung eine komplizierte, schwer beherrschbare Kippbewegung. Auch bieten sie dem Sperriegel in der offenen Stellung gegen den auf den Sperriegel lastenden Druck einer Feder keinen ausreichend sicheren Halt, da die Sperrscheibe in zwei Richtungen drehgelagert sein muß. Auch können durch diese Sperrscheibe nicht mehrere Sperriegel betätigt werden.

Aufgabe der Erfindung ist es, ein Zylinderschloß der eingangs genannten Art derart zu verbessern, daß es bei hoher Funktionssicherheit und Freigabe erst nach vollständigem Schlüsselabzug eine einfache Bauweise besitzt, klein baut und seine Sperrscheibe eine hohe Festigkeit gegenüber dem Druck des Sperriegels aufweist. Ferner ist es Aufgabe der Erfindung, ein Schloß der eingangs genannten Art zu schaffen, dessen Sperrscheibe in der Lage ist, mehr als ein Sperrteil zu steuern.

Diese Aufgaben werden erfindungsgemäß dadurch gelöst, daß die Sperrscheibe in Richtung der Schloßachse beweglich ist und in einer ersten axialen Stellung außerhalb des Bewegungsbereichs des Sperrteils oder des Übertragungsteils und in einer zweiten axialen Stellung innerhalb dieses Bewegungsbereichs liegt.

Eine solche auf einem Vorsprung des Zylinderkerns axial bewegliche, d. h. zu sich parallel verschiebbare, zur Schloßachse senkrechte Sperrscheibe kann sehr sicher gelagert sein und braucht nur eine Schubbewegung gegenüber dem Zylinderkern auszuführen. Dagegen braucht diese Scheibe sich nicht gegenüber dem Zylinderkern zu drehen, sondern sie wird durch diesen gedreht. Die « Sperrbereitschaftsstellung » des oder der Sperr- oder Übertragungsteile wird nicht durch ein Verkippen oder Drehen der Sperrscheibe aufgehoben, sondern allein durch ein Verschieben dieser in axialer Richtung. Hierdurch sind die Bewegungsvorgänge sehr einfach und von hoher Sicherheit.

Eine solche Sperrscheibe kann hohe Kräfte durch die Sperr- bzw. Übertragungsteile aufnehmen und kann sich nicht durch Erschütterungen lösen. Darüber hinaus sind kleine Außenabmessungen erreichbar, und an dem Rand der Sperrscheibe, der gleichmäßig, insbesondere kreisförmig ausgeführt sein kann, können mehr als ein Sperr- bzw. Übertragungsteil anliegen.

Vorzugsweise wird vorgeschlagen, daß die Sperrscheibe durch den axial beweglichen Zylinderkern in die beiden axialen Stellungen bewegbar ist. Hierdurch kann an der Sperrscheibe ein Zylinderkern befestigt sein, der erst nach vollständigem Schlüsselabzug sich und die Sperrscheibe axial aus der Sperrbereitschaftsstellung bewegt. Ferner wird vorgeschlagen, daß die Sperrscheibe von der ersten zur zweiten axialen Stellung parallel verschiebbar ist.

Besonders vorteilhaft ist es, wenn der oder die Exzenter in einer Ausnehmung der Sperrscheibe einliegt bzw. einliegen. Hierdurch erhält die Sperrscheibe eine weitere Führung für die axiale Bewegung. Alternativ können aber auch die nur wenig über den Rand der Sperrscheibe vorstehenden Exzenter einen Teil der Sperrscheibe bilden, insbesondere an dieser angeformt sein. Ferner wird vorgeschlagen, daß das Sperrteil oder das Übertragungsteil um eine parallel zur Schloßachse liegende Achse verschwenkbar ist. Eine schräge Anordnung, d. h. bis 30° aus der parallelen Richtung, ist auch möglich.

Besonders vorteilhaft ist es, wenn die Sperrscheibe auf einer koaxialen Verlängerung des Zylinderkerns axial verschieblich ist. Eine solche Verlängerung läßt sich zusätzlich nutzen, um mit dem freien Ende einen elektrischen Schalter zu betätigen.

Um sicherzugehen, daß nach der Bewegung des oder der Sperr- bzw. Übertragungsteils(e) in die entsperrte Stellung die Sperrscheibe in den Bereich der Sperr- bzw. Übertragungsteile gelangt, wird vorgeschlagen, daß die Sperrscheibe durch ein Federelement vom Zylinderkern weg beaufschlagt ist. Dabei kann die Sperrscheibe in ihrer sperrenden Stellung in Höhe des Sperrteils oder des Übertragungsteils liegen.

Ferner wird vorgeschlagen, daß die Sperrscheibe kreis- oder ringförmig ist und mit ihrer mittigen Öffnung auf der koaxialen Verlängerung des Zylinderkerns verschieblich gelagert ist. Eine besonders sichere und feste Lagerung der Sperrscheibe wird dadurch erreicht, daß diese auf einer Buchse befestigt ist, die auf der koaxialen Verlängerung des Zylinderkerns verschieblich gelagert ist.

Ferner wird vorgeschlagen, daß der Exzenter parallel zur Schloßachse am Zylinderkern oder an einer am Zylinderkern drehfesten Scheibe befestigt ist. Hierdurch gelingt eine besonders kleine Bauweise in axialer Richtung.

Eine sichere Anlage der Sperr- bzw. Übertragungsteile an der Sperrscheibe wird dadurch gewährleistet, daß das Sperrteil bzw. das Übertragungsteil zur Sperrscheibe hin federnd beaufschlagt ist. Auch wird vorgeschlagen, daß das Sperr- bzw. Übertragungsteil von der zweiten nicht sperrenden Lage in die erste sperrende Lage zur Schloßachse hin bewegbar ist.

Besonders vorteilhaft ist es, wenn zu beiden Seiten der Schloßachse je ein Sperr- bzw. Übertragungsteil gelagert ist. Hierdurch können auch Lenkspindelblockierungsvorrichtungen sicher und gleichmäßig gesteuert werden, die zwei Sperriegel oder Sperrteile aufweisen. Insbesondere sind Klemmgesperre mit zwei Käfigen steuerbar, die jeweils Klemmrollen in entgegengesetzten Drehrichtungen bewegen.

Vorzugsweise wird vorgeschlagen, daß für jedes Sperr- bzw. Übertragungsteil ein Exzenter vorgesehen ist. Dabei können die beiden Exzenter zur Schloßachse einander diametral gegenüberliegen. Ferner kann die Sperrscheibe für die Exzenter zwei diametral gegenüberliegende Ausnehmungen in ihrem Rand aufweisen.

Um sicherzustellen, daß in der Schlüsselabzugsstellung die in der sperrenden Lage befindlichen Sperr- bzw. Übertragungsteile durch Manipulation nicht nach außen in die nichtsperrende Lage bewegt werden können, wird vorgeschlagen, daß das (oder die) Sperr- bzw. Übertragungsteil(e) auf der dem Zylinderkern zugewandten Seite einen Vorsprung oder eine Ausnehmung aufweist, der bzw. die in einer Ausnehmung oder einen Vorsprung der Sperrscheibe in der sperrenden Lage eingreift, wobei in der Schlüsselabzugsstellung diese Verbindung eine Bewegung der Sperr- bzw. Übertragungsteile zur nicht sperrenden Lage hin verhindern. Dabei kann der Rand der Sperrscheibe und/oder der Rand des Sperr- bzw. Übertragungsteils eine schräge Anlauffläche zur einrastenden Verbindung dieser Teile aufweisen.

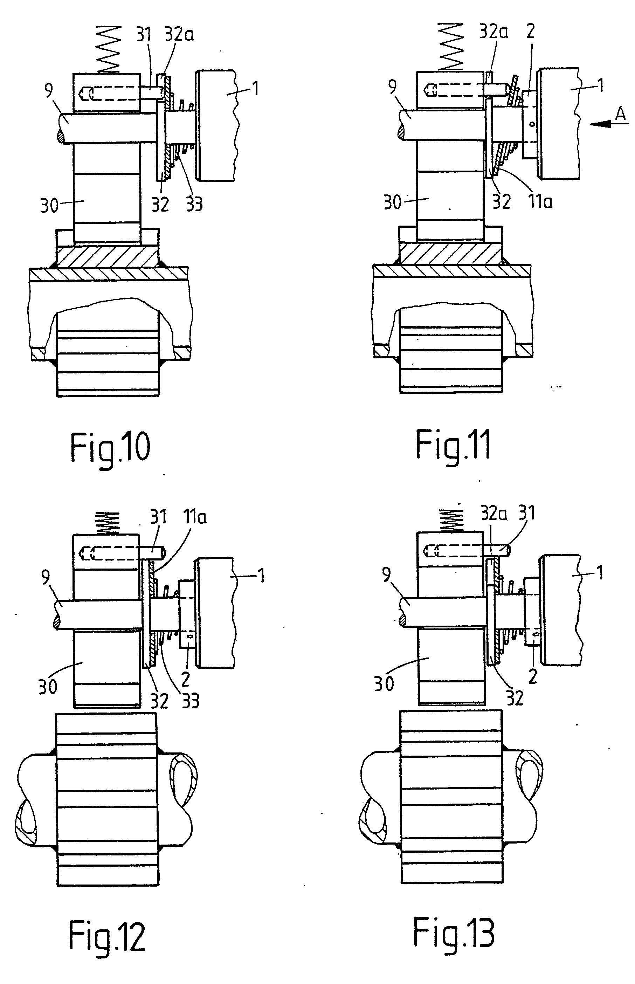

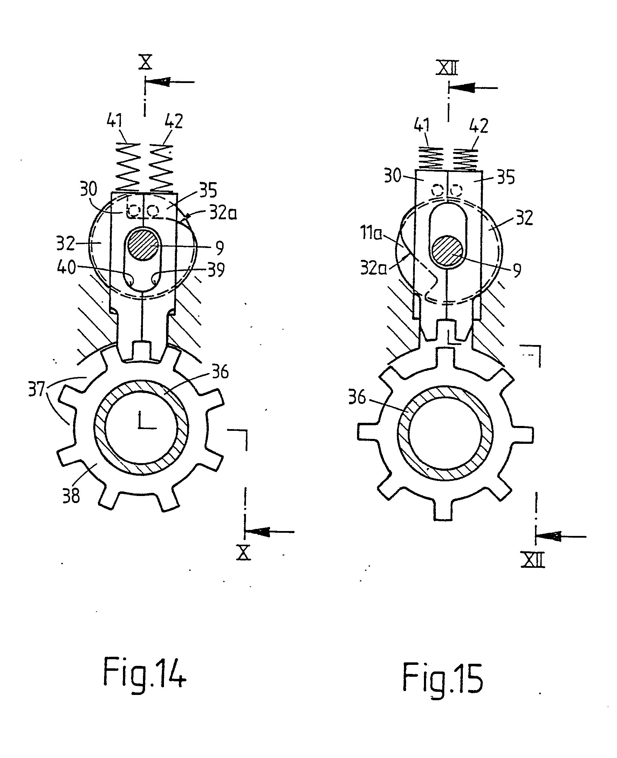

Eine besonders kleine Bauweise in Richtung der Schloßachse wird dadurch erreicht, daß am Sperrteil oder Sperriegel ein Vorsprung befestigt ist, an dem der Exzenter, Nocken oder die Kurvenscheibe zur Betätigung des Sperrteils oder Sperriegels zur Anlage gelangt, und daß bei einer Bewegung des Zylinderkerns in Schlüsseleinführrichtung die Sperrscheibe durch den Vorsprung relativ zum Zylinderkern hin verdrängbar, verschiebbar oder verkippbar ist (Fig. 10 bis 15). Dies führt ferner zu sehr einfachen Bauelementen und einer hohen Zuverlässigkeit als auch hoher Stabilität.

Weitere vorteilhafte Ausgestaltungen sind in den Ansprüchen 21 bis 27 aufgeführt.

Zwei Ausführungsbeispiele der Erfindung sind in den Zeichnungen dargestellt und werden im folgenden näher beschrieben. Es zeigen :

Figur 1 einen Längsschnitt durch ein erstes Ausführungsbeispiel des Schlosses in der « Halt »-Stellung nach Schlüsselabzug ;

Figur 2 einen Schnitt nach II-II in Fig. 1 ;

Figur 3 einen Schnitt nach III-III in Fig. 2 ;

Figur 4 einen Längsschnitt durch das Schloß bei in « Halt »-Stellung eingestecktem Schlüssel, ohne diesen danach zu verdrehen ;

Figur 5 einen Längsschnitt durch das Schloß nach Drehen des Schlüssels in die Stellung « Fahrt » ;

Figur 6 einen Schnitt nach VI-VI in Fig. 5 ;

Figur 7 einen Längsschnitt durch das Schloß nach Zurückdrehen des Schlüssels in die « Halt »-Stellung, ohne ihn abzuziehen (Sperrbereitschaftsstellung) ;

Figur 8 einen Schnitt nach VIII-VIII in Fig. 7 ;

Figur 9 einen Schnitt nach IX-IX in Fig. 8 ;

Figur 10 einen Längsschnitt durch ein zweites Ausführungsbeispiel in der « Halt »-Stellung nach Schlüsselabzug ;

Figur 11 einen Längsschnitt in der « Halt »-Stellung nach Einstecken des Schlüssels ;

Figur 12 einen Längsschnitt in der Stellung Fahrt ;

Figur 13 einen Längsschnitt nach Drehen des Schlüssels aus der « Fahrt »-Stellung in die « Halt »-Stellung, ohne den Schlüssel abzuziehen ;

Figur 14 einen Schnitt nach X-X in Fig. 10 ;

Figur 15 einen Schnitt nach XII-XII in Fig. 12.

In einem Zylindergehäuse 1 ist koaxial ein Zylinderkern 2 drehbar gelagert, der Zuhaltungsplättchen 3 aufweist, die durch einen in den Schlüsselkanal des Zylinderkerns 2 einführbaren Schlüssels 4 in die nichtsperrende Stellung bewegbar sind. Bei Einstecken des Flachschlüssels 4 verdrängt dieser zwei Rollen 5, die gegen den Druck einer Feder 6 den Zylinderkern 2 in Schlüsseleinführungsrichtung um mehrere Millimeter in Richtung der Schloßachse 7 verdrängen.

An dem der Schlüsseleinführungsseite gegenüberliegenden Ende ist am Zylinderkern 2 eine koaxiale Scheibe 8 fest, die eine koaxiale, wellenförmige Verlängerung 9 des Zylinderkerns trägt, deren freies Ende in einen nicht dargestellten elektrischen Schalter (Zündschalter) hineinreicht.

Auf der Verlängerung 9 des Zylinderkerns ist eine Buchse 10 axial verschieblich gelagert, die auf ihrem Umfang eine koaxiale Sperrscheibe 11 trägt. Zwischen Sperrscheibe 11 und Scheibe 8 liegt eine konische Schraubendruckfeder 12 koaxial ein, die die Scheibe 11 von der Scheibe 8 wegdrückt. Der Weg der Buchse 10 wird auf der dem Zylinderkern abgewandten Seite durch einen auf der Verlängerung 9 sitzenden Sperring 13 begrenzt.

Auf diametral gegenüberliegenden Seiten springen am Rand der Scheibe 8 zur Achse 7 parallele zapfenförmige Exzenter 14, 15 vor, deren Länge gleich oder größer ist als der Bewegungsspielraum der Buchse 10 bzw. der Sperrscheibe 11. Die Exzenter 14, 15 liegen in allen Stellungen der Scheibe 11 in Ausnehmungen 16, 17 des Randes der Sperrscheibe 11 ein, wobei die Breite dieser Ausnehmungen nur wenig größer ist als die Breite der Exzenter. Die radiale Höhe dieser Exzenter ist dagegen um ca. 1 bis 3 mm größer als die Tiefe dieser Ausnehmungen, so daß die Exzenter 14, 15 um diesen Betrag über den zylindrischen Umfang der Sperrscheibe 11 hinausstehen.

Zu beiden Seiten der wellenförmigen Verlängerung 9 liegen zwei Hebel 20, 21 an, deren Drehachsen 22, 23 parallel zur Schloßachse 7 liegen. Die Hebel sind plattenförmig ausgebildet, wobei ihre Flachseiten rechtwinklig zur Achse 7 sind. Die Hebel können zweiarmig ausgeführt sein, wobei die vom Zylinderschloß abgewandten Hebelenden Sperrbolzen für die Lenkspindel eines Kraftfahrzeugs sein können. Alternativ können aber auch die Hebel 20, 21 Übertragungsteile sein, die wiederum Sperrteile bewegen. Diese Sperrteile können beispielsweise Rollen enthaltende zylindrische Käfige sein, die ein Klemmgesperre für eine Lenkspindel bilden.

Die einander zugewandten Stirnseiten der Hebel 21, 22 werden durch Federn 24, 25 zur Verlängerung 9 bzw. zur Buchse 10 hin gedrückt und liegen in der sperrenden ersten Stellung am Umfang der Buchse 10 an. Dabei liegt die Sperrscheibe 11 zwischen diesen Hebeln und der Scheibe 8 bzw. dem Zylinderkern 2.

Auf den dem Zylinderkern 2 zugewandten Flachseiten der Hebel sind nahe der Buchse 10 je ein Vorsprung 26, 27 befestigt, wobei diese zapfenförmigen Vorsprünge jeweils in einer zum Rand der Sperrscheibe hin sich erweiternden Nut bzw. Ausnehmung in der Seitenfläche der Sperrscheibe 11 einliegen. Da diese beiden Nuten 28, 29 etwa tangential zum Umfang der Buchse 10 liegen, zueinander parallel angeordnet sind und sich zu entgegengesetzten Seiten hin öffnen und etwa parallel zu dem Scheibendurchmesser liegen, auf dem die Exzenter 14, 15 bzw. die Ausnehmungen 17, 16 liegen, können die Zapfen bzw. Vorsprünge 26, 27 nur dann aus diesen Nuten herausgelangen, wenn die Scheibe in Schlüsseldrehrichtung gedreht wird. Auf der Sperrscheibenseite, in der die Nuten angeordnet sind und die dem Zylinderkern abgewandt ist, sind im Bereich zwischen dem Scheibenrand und der Nut jeweils eine Schrägfläche als Anlauffläche 30, 31 vorgesehen, die dafür sorgen, daß die Hebel 20, 21 mit ihren Vorsprüngen 26, 27 in die Ausnehmungen 28, 29 durch den Druck der Federn 24, 25 einrasten, wobei während dieses Einrastvorganges die Sperrscheibe 11 gegen den Druck der Feder 12 zum Zylinderkern 2 um wenige Millimeter bewegt wird.

Statt einem Paar von Hebeln 20, 21 kann auch ein Hebel und nur ein Exzenter vorgesehen sein. Ferner kann die Zahl der Hebel und Exzenter auch größer als zwei sein. Statt Hebel können auch Schieber seitlich an der Verlängerung 9 bzw. der Buchse 10 anliegen und von der Sperrscheibe 32 betätigt werden. Diese Schieber können etwa radial zur Sperrscheibe 32 bewegt werden. Darüber hinaus braucht die Sperrscheibe 32 nicht unbedingt kreis- oder ringförmig zu sein (z. B. Kurvenscheibe) und kann die Exzenter tragen, und insbesondere können die Exzenter an der Sperrscheibe angeformt sein. Auch können die Hebel bzw. Sperr- oder Übertragungsteile die Ausnehmungen aufweisen und statt dessen die Sperrscheibe Vorsprünge besitzen.

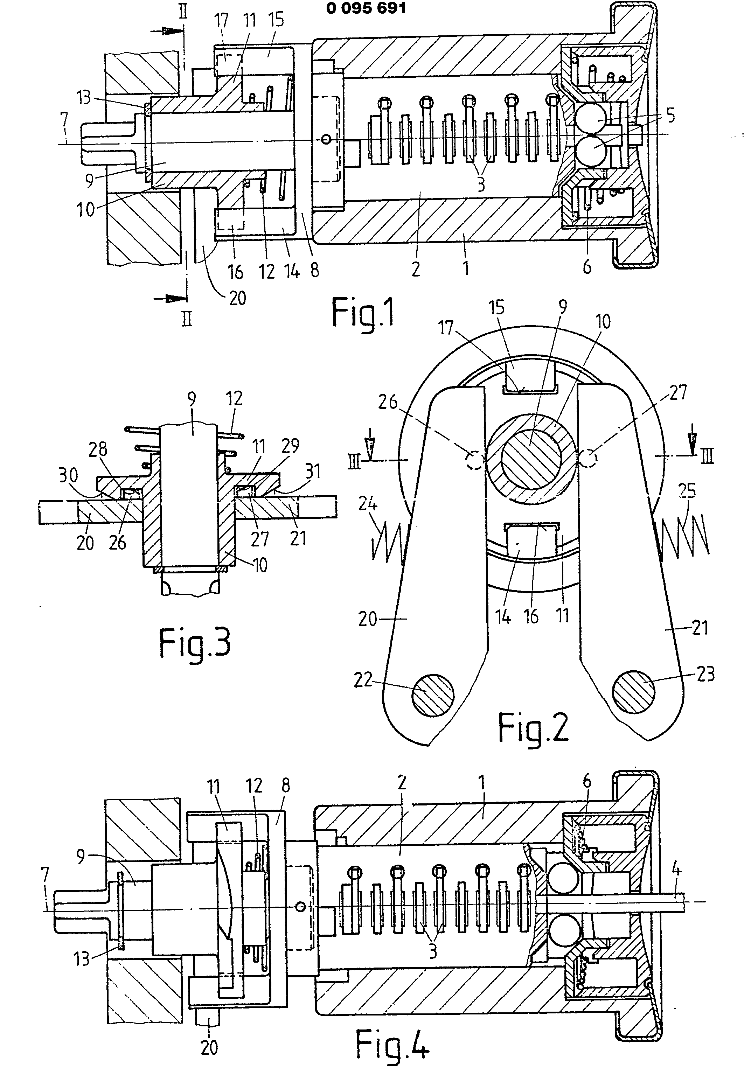

In der in den Figuren 1 bis 3 dargestellten « Halt »-Stellung ist der Schlüssel abgezogen und liegen die Sperrteile 20, 21 an der Buchse 10 außen an. Sie nehmen damit ihre Sperrstellung ein. Die Sperrscheibe 11 liegt seitlich neben den Sperrteilen zwischen diesen und dem Zylinderkern.

Sobald der Schlüssel 4 eingesteckt wird, verdrängt dieser entsprechend Fig. 4 den Zylinderkern in das Schloß hinein und damit die Scheibe 8 mit den Exzentern 14, 15 von der Schlüsseleinführungsseite weg. Dieser Bewegung vermag die Sperrscheibe 11 nicht zu folgen, da sie an den Seitenflächen der Sperrteile 20, 21 anliegt. Die Feder 12 wird hierbei zusammengedrückt. Die Zuhaltungsplättchen 3 wurden durch den Schlüssel 4 in die Stellung gebracht, in der sie den Zylinderkern nicht mehr sperren.

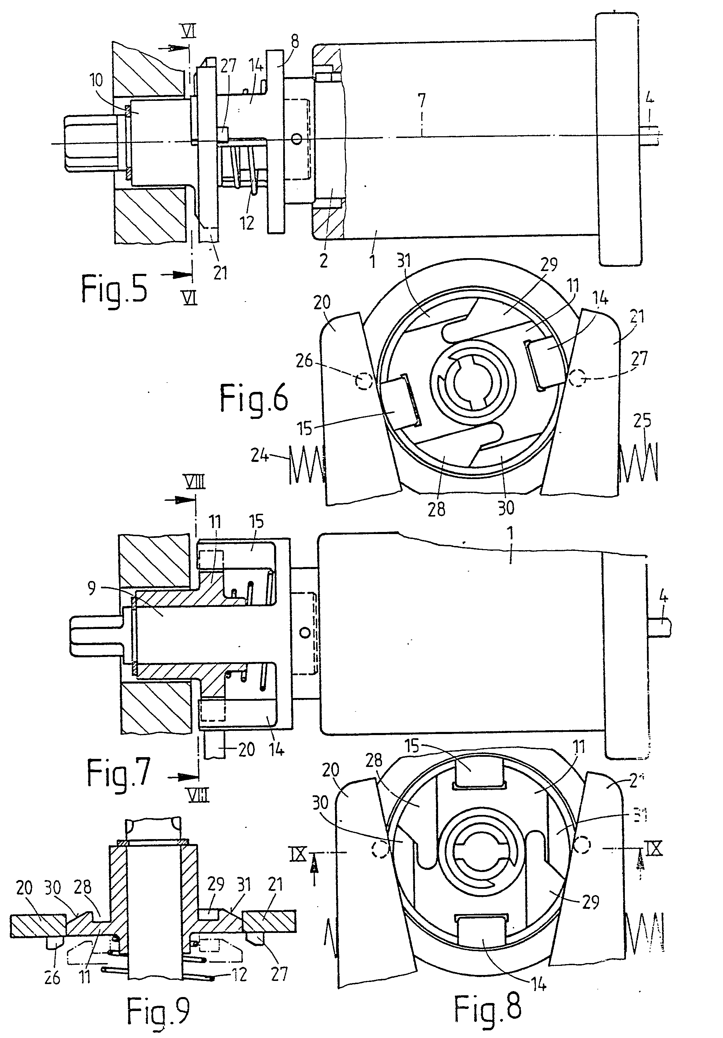

Durch den Schlüssel 4 werden nunmehr der Zylinderkern und damit die Exzenter 14, 15 und die Sperrscheibe 11 gedreht. Die Exzenter treiben hierdurch die Sperrteile 20, 21 so weit nach außen, daß die Sperrscheibe 11 in den größer gewordenen Zwischenraum zwischen den Sperrteilen durch die Feder 12 einfallen kann, Fig. 5 und 6. In dieser « Fahrt »-Stellung werden die Sperrteile gegen den Druck der Federn 24, 25 durch die Exzenter gehalten. Wird der Zylinderkern weiter zur Anlaßstellung gedreht, so halten hier auch die Exzenter oder die Scheibe die Sperrteile nach außen.

Wird der Zylinderkern zurück zur « Halt »-Stellung gedreht, so kommen die Exzenter außer Eingriff, und die Sperrteile liegen nur noch am Außenumfang der Sperrscheibe 12 an, Fig. 7 und 8. In dieser « Sperrbereitschaftsstellung » werden die Sperrteile so lange gehalten, bis der Schlüssel vollständig abgezogen ist. In dem Moment des vollständigen Schlüsselabzugs gelangt der Zylinderkern 2 aufgrund der Rollen 5 und der Feder 6 in die Ausgangslage, wobei der Zylinderkern über die Verlängerung 9 und den Sperring 13 die Buchse 10 mit sich zieht und damit die Sperrscheibe 11 aus dem Zwischenraum zwischen den Sperrteilen herauszieht. Hierdurch können die Sperrteile durch den Druck der Federn 24 und 25 wieder die sperrende Stellung einnehmen. Bei dieser Bewegung zur Buchse 10 bzw. der Verlängerung 9 hin rasten die Vorsprünge 26, 27 in die Ausnehmungen 28, 29 der Sperrscheibe ein.

Das Ausführungsbeispiel nach den Figuren 10 bis 15 unterscheidet sich von dem ersten unter anderem dadurch, daß die Sperrteile nicht Hebel, sondern bolzenförmige, längsbewegliche Sperriegel 30, 35 sind, die mit zwei Seitenflächen aneinanderliegen, wobei diese beiden Seitenflächen radial zur Lenkspindel 36 eines Kraftfahrzeugs angeordnet sind. Die beiden Sperriegel greifen in Ausnehmungen 37 einer auf der Lenkspindel angeordneten Buchse 38 ein. In den beiden Seitenflächen der Sperriegel sind Ausnehmungen 39, 40 vorgesehen, die sich zu einem Langloch ergänzen, das von einer Verlängerung 9 des Zylinderkerns durchdrungen ist. Diese Verlängerung endet in einem nicht dargestellten Schalter des Schlosses. Beide Sperriegel 30, 35 sind durch Federn 41, 42 zur Lenkspindel hin beaufschlagt. Die Größe der Ausnehmungen 37 und die Anordnung der beiden Sperriegel ist derart, daß nach Abzug des Schlüssels zumindest einer der beiden Sperriegel in eine der Ausnehmungen der Buchse 38 einfällt.

An den der Lenkspindel 36 abgewandten Enden der Sperriegel 30, 35 steht je ein zur Schloßachse paralleler Stift 31 auf der dem Zylinderkern zugewandten Seite vor. Beide Stifte bilden Vorsprünge der Sperriegel und liegen am äußeren Rand einer Kurvenscheibe 32 an, die auch ein Exzenter oder Nocken sein kann. Die Kurvenscheibe 32 ist auf der wellenförmigen Verlängerung 9 des Zylinderkerns 2 drehfest und axial gegenüber der Verlängerung unverschieblich befestigt, so daß bei einer Drehung des Zylinderkerns die Kurvenscheibe 32 mit verdreht wird und die Sperriegel 30, 35 aus den Ausnehmungen 37 gegen den Druck der Federn 41, 42 heraushebt.

Die Kurvenscheibe 32 ist über ca. drei Viertel ihres Umfanges kreisförmig mit konstantem Radius zur Schloß- bzw. Verlängerungsachse. Im verbleibenden Umfangsviertel weist die Kurvenscheibe 32 eine Ausnehmung 32a auf, deren Radius etwa nur die Hälfte des übrigen Radius beträgt und in der die Stifte 31 in der « Halt »-Stellung des Schlosses bei Schlüsselabzug einliegen (Fig. 10).

Zwischen der Kurvenscheibe 32 und dem Zylinderkern 2 ist eine Sperrscheibe 11a axial beweglich auf der Verlängerung 9 gelagert, die kreisscheibenförmig ist und durch eine konische Schraubendruckfeder 33, die zwischen der Sperrscheibe und dem Zylinderkern liegt, gegen die Kurvenscheibe 32 gedrückt wird. In den Stellungen « Halt » und « Fahrt » des Schlosses liegt die Sperrscheibe 11a parallel an der Seitenfläche der Kurvenscheibe 32 an, so daß beide Scheiben 11a, 32 rechtwinklig und axial zur Schloß- bzw. Zylinderkernverlängerungsachse liegen. In dieser Stellung der Sperrscheibe 11a liegt diese im Bewegungsbereich der Stifte 31, so daß in dieser Sperrscheibenstellung die Sperriegel 30, 35 in die Ausnehmungen 37 nicht einfallen können, siehe Fig. 13. Hierzu ist es erforderlich, daß die Stifte 31 so weit von den Sperriegeln seitlich vorstehen, daß sie zumindest die Kurvenscheibe 32 und die Sperrscheibe 11a überragen. Da im Ausführungsbeispiel die Kurvenscheibe dicht an den Sperriegeln anliegt, ist die Länge der Stifte 31 größer oder gleich der Dicke beider Scheiben 11a, 32 zusammengenommen.

Wird in der « Halt »-Stellung nach Fig. 10 der nicht dargestellte Schlüssel in Richtung des Pfeiles A (Fig. 11) eingesteckt, so wird bei diesem Zylinderschloß mit axial beweglichem Zylinderkern 2 der Zylinderkern in Richtung A zu den Sperriegeln hin bewegt. Da in der « Halt »-Stellung die Sperriegel in der Sperrstellung sich befinden, liegen die Stifte 31 in der Ausnehmung 32a der Kurvenscheibe 32 ein und verhindern während der axialen Bewegung eine gleiche Mitbewegung der Sperrscheibe 11a mit der Kurvenscheibe 32. Vielmehr wird die kreisförmige Sperrscheibe 11a von der Kurvenscheibe 32 durch die Stifte 31 gegen den Druck der Feder 33 abgehoben und verkippt (Fig. 11). Alternativ kann die Sperrscheibe 11a aber auch statt zu verkippen durch die Stifte 31 parallel auf der Verlängerung 9 des Zylinderkerns verschoben werden, wenn eine entsprechende Parallelführung die Sperrscheibe gegenüber der Verlängerung 9 aufweist.

Wird nun der Zylinderkern 2 durch den Schlüssel von der « Halt »-Stellung in die « Fahrt »-Stellung gedreht (Fig. 12), so werden die Stifte 31 durch die Kurvenscheibe 32 angehoben und somit die Sperriegel 30, 35 in die entsperrte Stellung gebracht. Da der Radius der Sperrscheibe 11a geringfügig kleiner ist als der Radius der Kurvenscheibe 32 außerhalb des Bereichs der Ausnehmung 32a, kann in der « Fahrt »-Stellung nach Fig. 12 die Scheibe 11a durch die Druckfeder 33 in die Anlagestellung an die Kurvenscheibe zurückspringen bzw. rasten. Die Stifte 31 sind in dieser Stellung weiter von der Schloß- bzw. Verlängerungsachse entfernt als der Radius der Sperrscheibe 11a.

Wird der Zylinderkern 2 durch den Schlüssel aus der « Fahrt »-Stellung in die « Halt »-Stellung zurückgedreht (Sperrbereitschaftsstellung, Fig. 13), so steht im Bereich der Stifte nunmehr die Ausnehmung 32a der Kurvenscheibe. Die Stifte 31 würden nun in die Ausnehmung 32a durch die Federn 41, 42 hineingedrückt, wenn nicht die Sperrscheibe sie daran hindern würde. Die Stifte 31 liegen nunmehr am äußeren Rand der Sperrscheibe 11a an, die in dieser Stellung die Aufgabe der Kurvenscheibe entsprechend der Stellung « Fahrt » übernimmt. Wird nun der Schlüssel abgezogen, so führt dies zu einer Bewegung des Zylinderkerns entgegengesetzt dem Pfeil A. Mit dem Zylinderkern werden die Verlängerung 9 und die Kurvenscheibe 32 zurückgezogen. Hierdurch gelangt die Sperrscheibe 11a außerhalb des Bewegungsbereichs der Stifte 31, so daß diese in die Ausnehmung 32a einfallen können (Fig. 10). Die Länge der Stifte 31 ist so gewählt, daß sie stets im axialen Bewegungsbereich der Kurvenscheibe 32 bleiben, aber ihre Enden in der zurückgezogenen Stellung des Zylinderkerns außerhalb der Ebene der Sperrscheibe 11a liegen.

## Patentansprüche

1. Zylinderschloß, insbesondere Lenkschloß für ein Kraftfahrzeug, mit mindestens einem durch einen Zylinderkern (2) betätigbaren Sperrteil (20, 21, 30), insbesondere Sperriegel (30), der direkt oder über ein Übertragungsteil (20, 21) von einem durch den Zylinderkern betätigbaren Exzenter (15), Nocken (15) oder Kurvenscheibe (32) in die nicht sperrende Lage bewegbar ist und dort durch eine rechtwinklig zur Schloßachse (7) angeordnete Sperrscheibe (11, 11a) gehalten ist, die erst durch Schlüsselabzug freigebbar ist, dadurch gekennzeichnet, daß die Sperrscheibe (11, 11a) in Richtung der Schloßachse (7) beweglich ist und in einer ersten axialen Stellung außerhalb des Bewegungsbereichs des Sperrteils (20, 21, 30, 31) oder des Übertragungsteils (20, 21) und in einer zweiten axialen Stellung innerhalb dieses Bewegungsbereichs liegt.

2. Zylinderschloß nach Anspruch 1, dadurch gekennzeichnet, daß die Sperrscheibe (11) durch den axial beweglichen Zylinderkern (2) in die beiden axialen Stellungen bewegbar ist.

3. Zylinderschloß nach Anspruch 1 oder 2, dadurch gekennzeichnet, daß die Sperrscheibe (11) von der ersten zur zweiten axialen Stellung parallel verschiebbar ist.

4. Zylinderschloß nach einem der Ansprüche 1 bis 3, dadurch gekennzeichnet, daß der oder die Exzenter (14, 15) in einer Ausnehmung (16, 17) der Sperrscheibe (11) einliegt bzw. einliegen.

5. Zylinderschloß nach einem der Ansprüche 1 bis 4, dadurch gekennzeichnet, daß das Sperrteil oder das Übertragungsteil (20, 21) um eine parallel zur Schloßachse (7) liegende Achse (22, 23) verschwenkbar ist.

6. Zylinderschloß nach einem der Ansprüche 1 bis 5, dadurch gekennzeichnet, daß die Sperrscheibe (11) auf einer koaxialen Verlängerung (9) des Zylinderkerns (2) axial verschieblich ist.

7. Zylinderschloß nach einem der Ansprüche 1 bis 6, dadurch gekennzeichnet, daß die Sperrscheibe (11) durch ein Federelement (12) vom Zylinderkern weg beaufschlagt ist.

8. Zylinderschloß nach einem der Ansprüche 1 bis 7, dadurch gekennzeichnet, daß die Sperrscheibe (11) in ihrer sperrenden Stellung in Höhe des Sperrteils oder des Übertragungsteils (20, 21) liegt.

9. Zylinderschloß nach einem der Ansprüche 1 bis 8, dadurch gekennzeichnet, daß die Sperrscheibe (11) kreis- oder ringförmig ist und mit ihrer mittigen Öffnung auf der koaxialen Verlängerung (9) des Zylinderkerns (2) verschieblich gelagert ist.

10. Zylinderschloß nach einem der Ansprüche 1 bis 9, dadurch gekennzeichnet, daß die Sperrscheibe (11) auf einer Buchse (10) befestigt ist, die auf der koaxialen Verlängerung (9) des Zylinderkerns (2) verschieblich gelagert ist.

11. Zylinderschloß nach einem der Ansprüche 1 bis 10, dadurch gekennzeichnet, daß der Exzenter (14, 15) parallel zur Schloßachse (7) am Zylinderkern (2) oder an einer am Zylinderkern drehfesten Scheibe (8) befestigt ist.

12. Zylinderschloß nach einem der Ansprüche 1 bis 11, dadurch gekennzeichnet, daß das Sperrteil bzw. das Übertragungsteil (20, 21) zur Sperrscheibe (11) hin federnd beaufschlagt ist.

13. Zylinderschloß nach einem der Ansprüche 1 bis 12, dadurch gekennzeichnet, daß das Sperrbzw. Übertragungsteil (20, 21) von der zweiten nicht sperrenden Lage in die erste sperrende Lage zur Schloßachse (7) hin bewegbar ist.

14. Zylinderschloß nach einem der Ansprüche 1 bis 13, dadurch gekennzeichnet, daß zu beiden Seiten der Schloßachse (7) je ein Sperr- bzw. Übertragungsteil (20, 21) gelagert ist.

15. Zylinderschloß nach Anspruch 14, dadurch gekennzeichnet, daß für jedes Sperr- bzw. Übertragungsteil (20, 21) ein Exzenter (14, 15) vorgesehen ist.

16. Zylinderschloß nach Anspruch 15, dadurch gekennzeichnet, daß die beiden Exzenter (14, 15) zur Schloßachse (7) einander diametral gegenüberliegen.

17. Zylinderschloß nach Anspruch 15 oder 16, dadurch gekennzeichnet, daß die Sperrscheibe (11) für die Exzenter (14, 15) zwei diametral gegenüberliegende Ausnehmungen (16, 17) in ihrem Rand aufweist.

18. Zylinderschloß nach einem der Ansprüche 1 bis 17, dadurch gekennzeichnet, daß das (oder die) Sperr- bzw. Übertragungsteil(e) (20, 21) auf der dem Zylinderkern (2) zugewandten Seite einen Vorsprung (26, 27) oder eine Ausnehmung aufweist, der bzw. die in einer Ausnehmung (28, 29) oder einen Vorsprung der Sperrscheibe in der sperrenden Lage eingreift, wobei in der Schlüsselabzugsstellung diese Verbindung eine Bewegung der Sperr- bzw. Übertragungsteile (20, 21) zur nicht sperrenden Lage hin verhindert.

19. Zylinderschloß nach Anspruch 18, dadurch gekennzeichnet, daß der Rand der Sperrscheibe (11) und/oder der Rand des Sperr- bzw. Übertragungsteils (20, 21) eine schräge Anlauffläche (30, 31) zur einrastenden Verbindung dieser Teile aufweist.

20. Zylinderschloß nach einem der Ansprüche 1 bis 19, dadurch gekennzeichnet, daß am Sperrteil oder Sperriegel (30) ein Vorsprung (31) befestigt ist, an dem der Exzenter, Nocken oder die Kurvenscheibe (32) zur Betätigung des Sperrteils oder Sperriegels (30) zur Anlage gelangt, und daß bei einer Bewegung des Zylinderkerns (2) in Schlüsseleinführrichtung (A) die Sperrscheibe (11a) durch den Vorsprung (31) relativ zum Zylinderkern (2) hin verdrängbar, verschiebbar oder verkippbar ist (Fig. 10 bis 15).

21. Zylinderschloß nach Anspruch 20, dadurch gekennzeichnet, daß die Sperrscheibe durch ein auf einer Zylinderkernverlängerung (9) angeordnetes Federelement, insbesondere eine konische Schraubendruckfeder (33), vom Zylindergehäuse weg beaufschlagt ist.

22. Zylinderschloß nach Anspruch 20 oder 21, dadurch gekennzeichnet, daß die Sperrscheibe (11a) in die nicht sperrende axiale Stellung durch eine Axialbewegung des Zylinderkerns, insbesondere einer Zylinderkernverlängerung, bringbar ist, und daß die Sperrscheibe die sperrende Stellung erst einnimmt, nachdem der Vorsprung, insbesondere Stift (31) des Sperrteils oder Sperriegels (30) außerhalb des Bewegungsbereichs der Sperrscheibe ist.

23. Zylinderschloß nach einem der Ansprüche 20 bis 22, dadurch gekennzeichnet, daß neben der Sperrscheibe (11a) auf der dem Zylindergehäuse (1) abgewandten Seite der zur Zylinderkernachse axiale Exzenter, Nocken oder die Kurvenscheibe auf einer Zylinderkernverlängerung (9) fest ist.

24. Zylinderschloß nach Anspruch 23, dadurch gekennzeichnet, daß der Exzenter, Nocken oder die Kurvenscheibe (32) eine Anlagefläche für die Sperrscheibe (11a) bildet.

25. Zylinderschloß nach einem der Ansprüche 20 bis 24, dadurch gekennzeichnet, daß Exzenter, Nocken oder die Kurvenscheibe (32) am äußeren Rand eine Ausnehmung (32a) oder Rücksprung aufweist, in der bzw. dem der Vorsprung (31) oder Stift des Sperrteils (30) oder Sperriegels in der Sperrstellung einliegt (Fig. 10, 11).

26. Zylinderschloß nach einem der Ansprüche 20 bis 25, dadurch gekennzeichnet, daß der Vorsprung (31) ein zur Zylinderkernachse paralleler Stift ist.

27. Zylinderschloß nach einem der Ansprüche 20 bis 26, dadurch gekennzeichnet, daß neben dem Sperriegel (30) ein zweiter Sperriegel (35) parallel gelagert ist, der wie der erste Sperriegel einen Vorsprung (31) aufweist, der die Sperrscheibe (11a) verdrängt und durch Exzenter, Nocken oder Kurvenscheibe (32) betätigbar ist.

## Claims

1. Cylinder lock, especially steering lock for a motor vehicle, having at least one blocking part (20, 21, 30) actuatable by a cylinder core (2), especially a blocking bolt (30), which is movable directly or by way of a transmission part (20, 21) by an eccentric (15), dog (15) or cam disc (32) actuatable by the cylinder core into the non-blocking position and is held there by a blocking disc (11, 11a) arranged at right angles to the lock axis (7), which is releasable only by key withdrawal, characterised in that the blocking disc (11, 11a) is movable in the direction of the lock axis (7) and in a first axial position lies outside the range of movement of the blocking part (20, 21, 30, 31) or of the transmission part (20, 21) and in a second axial position lies within this range of movement.

2. Cylinder lock according to Claim 1, characterised in that the blocking disc (11) is movable into the two axial positions by the axially movable cylinder core (2).

3. Cylinder lock according to Claim 1 or 2, characterised in that the blocking disc (11) is displaceable parallel from the first to the second axial position.

4. Cylinder lock according to one of Claims 1 to 3, characterised in that the eccentric or eccentrics (14, 15) lies or lie in a recess (16, 17) of the blocking disc (11).

5. Cylinder lock according to one of Claims 1 to 4, characterised in that the blocking part or the transmission part (20, 21) is pivotable about a spindle (22, 23) lying parallel to the axis (7) of the lock.

6. Cylinder lock according to one of Claims 1 to 5, characterised in that the blocking disc (11) is axially displaceable on a coaxial prolongation (9) of the cylinder core (2).

7. Cylinder lock according to one of Claims 1 to 6, characterised in that the blocking disc (11) is loaded away from the cylinder core by a spring element (12).

8. Cylinder lock according to one of Claims 1 to 7, characterised in that the blocking disc (11), in its blocking position, lies at the level of the blocking part or of the transmission part (20, 21).

9. Cylinder lock according to one of Claims 1 to 8, characterised in that the blocking disc (11) is of circular or annular form and is displaceably mounted with its central opening on the coaxial prolongation (9) of the cylinder core (2).

10. Cylinder lock according to one of Claims 1 to 9, characterised in that the blocking disc (11) is secured on a bush (10) which is displaceably mounted on the coaxial prolongation (9) of the cylinder core (2).

11. Cylinder lock according to one of Claims 1 to 10, characterised in that the eccentric (14, 15) is secured parallel to the lock axis (7) on the cylinder core (2) or on a disc (8) fast in rotation with the cylinder core.

12. Cylinder lock according to one of Claims 1 to 11, characterised in that the blocking part or the transmission part (20, 21) is resiliently loaded towards the blocking disc (11).

13. Cylinder lock according to one of Claims 1 to 12, characterised in that the blocking or transmission part (20, 21) is movable from the second, non-blocking position into the first blocking position towards the lock axis (7).

14. Cylinder lock according to one of Claims 1 to 13, characterised in that a blocking or transmission part (20, 21) is mounted to each of the two sides of the lock axis (7).

15. Cylinder lock according to Claim 14, characterised in that an eccentric (14, 15) is provided for each blocking or transmission part (20, 21).

16. Cylinder lock according to Claim 15, characterised in that the two eccentrics (14, 15) lie diametrically opposite to one another in relation to the lock axis (7).

17. Cylinder lock according to Claim 15 or 16, characterised in that the blocking disc (11) has two diametrically opposite recesses (16, 17) in its marginal portion for the eccentrics (14, 15).

18. Cylinder lock according to one of Claims 1 to 17, characterised in that the blocking or transmission part (or parts) (20, 21) comprise(s) on the side facing the cylinder core (2) a projection (26, 27) or a recess which engages in the blocking position with a recess (28, 29) or a projection of the blocking disc, while in the key withdrawal position this connection prevents a movement of the blocking or transmission parts (20, 21) towards the non-blocking position.

19. Cylinder lock according to Claim 18, characterised in that the marginal portion of the blocking disc (11) and/or the marginal portion of the blocking or transmission part (20, 21) comprises an oblique ramp face (30, 31) for the snap-engaging connection of these parts.

20. Cylinder lock according to one of Claims 1 to 19, characterised in that on the blocking part or blocking bolt (30) a projection (31) is secured on which the eccentric, dog or cam disc (32) comes to abut for the actuation of the blocking part or blocking bolt (30), and in that on a movement of the cylinder core (2) in the key introduction direction (A) the blocking disc (11a) is displaceable, shiftable or tiltable in relation to the cylinder core (2) by the projection (31) (Figures 10 to 15).

21. Cylinder lock according to Claim 20, characterised in that the blocking disc is loaded away from the cylinder housing by a spring element, especially a conical spiral compression spring (33), arranged on a cylinder core prolongation (9).

22. Cylinder lock according to Claim 20 or 21, characterised in that the blocking disc (11a) is bringable into the non-blocking axial position by an axial movement of the cylinder core, especially a cylinder core prolongation, and in that the blocking disc assumes the blocking position only after the projection, especially pin (31), of the blocking part or blocking bolt (30) is outside the range of movement of the blocking disc.

23. Cylinder lock according to one of Claims 20 to 22, characterised in that beside the blocking disc (11a) the eccentric, dog or cam disc axial with the cylinder core axis is fixed on a cylinder core prolongation (9), on the side remote from the cylinder housing (1).

24. Cylinder lock according to Claim 23, characterised in that the eccentric, dog or cam disc (32) forms an abutment face for the blocking disc (11a).

25. Cylinder lock according to one of Claims 20 to 24, characterised in that the eccentric, dog or cam disc (32) has on the outer margin an aperture (32a) or recess in which the projection (31) or pin of the blocking part (30) or blocking bolt lies in the blocking position (Figures 10, 11).

26. Cylinder lock according to one of Claims 20 to 25, characterised in that the projection (31) is a pin parallel to the axis of the cylinder core.

27. Cylinder lock according to one of Claims 20 to 26, characterised in that parallel beside the blocking bolt (30) a second blocking bolt (35) is mounted which, like the first blocking bolt, comprises a projection (31) which displaces the blocking disc (11a) and is actuatable by eccentric, dog or cam disc (32).

**Revendications**

1. Serrure à cylindre, en particulier verrou de direction pour un véhicule automobile, avec au moins une pièce de verrouillage (20, 21, 30) pouvant être actionnée par un barillet (2), en particulier un pêne de verrouillage (30) qui peut être déplacé en position de non-verrouillage, directement ou par l'intermédiaire d'une pièce de transmission (20, 21), par un excentrique (15), une came (15) ou un disque à came (32) pouvant être actionné par le barillet, et qui y est maintenu par un disque de verrouillage (11, 11a) disposé orthogonalement à l'axe (7) de serrure, qui ne peut être libéré qu'après extraction de la clé, caractérisé par le fait que le disque de verrouillage (11, 11a) est mobile dans la direction de l'axe (7) de la serrure et occupe une première position axiale en dehors du domaine de déplacement de la pièce de verrouillage (20, 21, 30, 31) ou de la pièce de transmission et une seconde position axiale à l'intérieur de ce domaine de déplacement.

2. Serrure à cylindre selon la revendication 1, caractérisée par le fait que le disque de verrouillage (11) est mobile dans les deux positions axiales par le barillet (2) mobile axialement.

3. Serrure à cylindre selon la revendication 1 ou 2, caractérisée par le fait que le disque de verrouillage (11) est coulissant parallèlement de la première à la seconde position axiale.

4. Serrure à cylindre selon l'une des revendications 1 à 3, caractérisée par le fait que le ou les excentriques (14, 15) sont logés dans un évidement (16, 17) du disque de verrouillage (11).

5. Serrure à cylindre selon l'une des revendications 1 à 4, caractérisée par le fait que la pièce de verrouillage ou la pièce de transmission (20, 21) est pivotante autour d'un axe (22, 23) parallèle à l'axe (7) de serrure.

6. Serrure à cylindre selon l'une des revendications 1 à 5, caractérisée par le fait que le disque de verrouillage (11) est coulissant axialement sur un prolongement (9) coaxial du barillet (2).

7. Serrure à cylindre selon l'une des revendications 1 à 6, caractérisée par le fait que le disque de verrouillage (11) est soumis à l'action d'un élément de ressort (12) l'écartant du barillet.

8. Serrure à cylindre selon l'une des revendications 1 à 7, caractérisée par le fait que le disque de verrouillage (11), en position de verrouillage, se trouve à la hauteur de la pièce de verrouillage ou de la pièce de transmission (20, 21).

9. Serrure à cylindre selon l'une des revendications 1 à 8, caractérisée par le fait que le disque de verrouillage (11) est circulaire ou annulaire et est monté coulissant par son ouverture centrale sur le prolongement (9) coaxial du barillet (2).

10. Serrure à cylindre selon l'une des revendications 1 à 9, caractérisée par le fait que le disque de verrouillage (11) est fixé sur une douille (10) qui est montée coulissante sur le prolongement (9) coaxial du barillet (2).

11. Serrure à cylindre selon l'une des revendications 1 à 10, caractérisée par le fait que l'excentrique (14, 15) est fixé parallèlement à l'axe (7) de serrure sur le barillet (2) ou sur un disque (8) solidaire du barillet ou rotation.

12. Serrure à cylindre selon l'une des revendications 1 à 11, caractérisée par le fait que la pièce de verrouillage ou la pièce de transmission (20, 21) est rappelée par ressort vers le disque de verrouillage (11).

13. Serrure à cylindre selon l'une des revendications 1 à 12, caractérisée par le fait que la pièce de verrouillage ou de transmission (20, 21) est mobile en direction de l'axe (7) de serrure de la seconde position de non-verrouillage à la première position de verrouillage.

14. Serrure à cylindre selon l'une des revendications 1 à 13, caractérisée par le fait qu'une pièce de verrouillage ou de transmission (20, 21) est logée de chaque côté de l'axe (7) de serrure.

15. Serrure à cylindre selon la revendication 14, caractérisée par le fait qu'un excentrique (14, 15) est prévu pour chaque pièce de verrouillage ou de transmission (20, 21).

16. Serrure à cylindre selon la revendication 15, caractérisée par le fait que les deux excentriques (14, 15) sont diamétralement opposés l'un à l'autre par rapport à l'axe (7) de serrure.

17. Serrure à cylindre selon la revendication 15 ou 16, caractérisée par le fait que le disque de verrouillage (11) présente dans son bord deux évidements (16, 17) diamétralement opposés pour les excentriques (14, 15).

18. Serrure à cylindre selon l'une des revendications 1 à 17, caractérisée par le fait que la ou les pièces de verrouillage ou de transmission (20, 21) présentant sur le côté tourné vers le barillet (2) une saillie (26, 27) ou un évidement, qui est logé, en position de verrouillage, dans un évidement (28, 29) ou sur une saillie du disque de verrouillage, cette liaison empêchant, en position d'extraction de clé, un déplacement des pièces de verrouillage ou de transmission (20, 21) à la position de non-verrouillage.

19. Serrure à cylindre selon la revendication 18, caractérisée par le fait que le bord du disque de verrouillage (11) et/ou le bord de la pièce de verrouillage ou de transmission (20, 21) présente une surface de démarrage (30, 31) inclinée pour la liaison en encliquetage de ces pièces.

20. Serrure à cylindre selon l'une des revendications 1 à 19, caractérisée par le fait qu'une saillie (31) est fixée à la pièce de verrouillage ou au pêne de verrouillage (30), avec laquelle l'excentrique, la came ou le disque à came (32) coopère à butée pour l'actionnement de la pièce de verrouillage ou du pêne de verrouillage (30), et que, pour un déplacement du barillet (2) en direction (A) d'introduction de clé, le disque de verrouillage (11a) peut être déplacé, peut coulisser ou peut pivoter par la saillie (31) relativement au barillet (2) en direction de celui-ci (fig. 10 à 15).

21. Serrure à cylindre selon la revendication 20, caractérisée par le fait que le disque de verrouillage est rappelé à l'écartement du boîtier de cylindre par un élément de ressort disposé sur un prolongement (9) du barillet, en particulier en ressort de compression hélicoïdal conique (33).

22. Serrure à cylindre selon la revendication 20 ou 21, caractérisée par le fait que le disque de verrouillage (11a) peut être amené en position axiale de non-verrouillage, par un déplacement axial du barillet, en particulier un prolongement axial du barillet, et que le disque de verrouillage n'occupe la position de verrouillage qu'après que la saillie, en particulier la broche (31) de la pièce de verrouillage ou du pêne de verrouillage (30) soit en dehors du domaine de déplacement du disque de verrouillage.

23. Serrure à cylindre selon l'une des revendications 20 à 22, caractérisée par le fait que, en plus du disque de verrouillage (11a), sur le côté opposé au boîtier de cylindre (1), l'excentrique, la came ou le disque à came est fixé sur un prolongement (9) du barillet.

24. Serrure à cylindre selon la revendication 23, caractérisée par le fait que l'excentrique, la came ou le disque à came (32) forme une surface de butée pour le disque de verrouillage (11a).

25. Serrure à cylindre selon l'une des revendications 20 à 24, caractérisée par le fait que l'excentrique, la came ou le disque à came (32) présente sur son bord extérieur un évidement (32a) ou un épaulement dans lequel se loge la saillie (31) ou la broche de la pièce de verrouillage (30) ou du pêne de verrouillage en position de verrouillage (fig. 10, 11).

26. Serrure à cylindre selon l'une des revendications 20 à 25, caractérisée par le fait que la saillie (31) est une broche parallèle à l'axe du barillet.

27. Serrure à cylindre selon l'une des revendications 20 à 26, caractérisée par le fait que, en plus du pêne de verrouillage (30), un second pêne de verrouillage (35) est monté parallèlement, qui présente comme le premier pêne de verrouillage une saillie (31) qui déplace le disque de verrouillage (11a) et qui est actionné par un excentrique, une came ou un disque à came (32).

**0 095 691**

Fig.1

Fig.3

Fig.2

Fig.4

Fig.5

Fig.6

Fig.7

Fig.9

Fig.8

Fig.10

Fig.11

Fig.12

Fig.13

Fig.14

Fig.15